# EUROPEAN PATENT SPECIFICATION

(11) **EP 3 442 461 B1**
(45) Date of publication and mention of the grant of the patent: **10.11.2021**
(21) Application number: 17782008.1
(22) Date of filing: 20.03.2017
(51) Int. Cl.: A61C 7/08, A61C 7/20, A61C 7/14

(54) **ORTHODONTIC APPLIANCES PROMOTING COORDINATED MOVEMENT OF TEETH**
KIEFERORTHOPÄDISCHE VORRICHTUNGEN ZUR FÖRDERUNG DER KOORDINIERTEN BEWEGUNG VON ZÄHNEN
APPAREILS ORTHODONTIQUES FAVORISANT LE MOUVEMENT COORDONNÉ DES DENTS

(30) Priority: 14.04.2016 US 201662322655 P
(43) Date of publication of application: 20.02.2019
(73) Proprietor: 3M Innovative Properties Company, Saint Paul, Minnesota 55133-3427 (US)
(72) Inventor: CINADER, David K., Jr., Saint Paul, Minnesota 55133-3427 (US)
(74) Representative: Vossius & Partner Patentanwälte Rechtsanwälte mbB
(86) International application number: PCT/IB2017/051608
(87) International publication number: WO 2017/178908

(56) References cited:
- EP-A1- 2 000 111
- WO-A1-2009/078031
- WO-A2-2011/065985
- US-A1- 2007 248 926
- US-A1- 2010 285 419
- US-A1- 2013 209 952
- US-A1- 2015 238 282
- US-B2- 8 272 866
- US-B2- 8 308 478

## Description

### Background

Orthodontics is a specialized area of dentistry concerned with the diagnosis and treatment of dental malocclusions to improve bite function, hygiene, and facial aesthetics. Orthodontic therapy commonly uses appliances called brackets and molar tubes which are bonded to a patient's teeth. Brackets and molar tubes contain slots and passageways, respectively, to accommodate a resilient "U"-shaped wire called an orthodontic archwire. During treatment, the archwire is secured within the slots and passageways of the brackets and molar tubes. While the archwire is initially distorted, it gradually returns to its original shape over the course of treatment, thereby applying therapeutic forces to urge the malpositioned teeth to proper locations.

In some cases, for example when seeking to correct malocclusion in a crowded arch (i.e., where there is inadequate space for the teeth), the orthodontic therapy includes the extraction of a tooth to form a space in a given dental arch. Closing this space, by drawing the teeth on one or both sides of the space towards one another can alleviate the crowding of the teeth in the arch as one step towards creating a normal or near-normal occlusion. In other cases, it is necessary to close naturally occurring spaces between teeth, in order to move towards normal occlusion.

Another type of orthodontic treatment involves the use of resilient polymeric trays that fit over the teeth of the patient's dental arches. These trays, also known as aligners, alignment shells and polymeric appliances, are provided in a series and are intended to be worn in succession in order to gradually move the teeth in incremental steps toward a desired target arrangement. Some types of polymeric appliances have a row of tooth-shaped receptacles for receiving each tooth of the patient's dental arch, and the receptacles are oriented in slightly different positions from one appliance to the next in order to incrementally urge each tooth toward its desired target position by virtue of the resilient properties of the polymeric material. US 2013/209952 A1 discloses using a shell aligner accommodating movement of a patient's bracketed teeth. The shell aligner has a portion accommodating movement of a patient's bracketed teeth between a first position and a second position as elicited by force from an orthodontic braces appliance worn by the patient. WO 2011/065985 A2 discloses a removable orthodontic appliance for repositioning teeth comprising a trough shaped arch tray that defines an interstitial space between the sides of the arch tray for accommodating the teeth. The arch tray form fits over the contours of the teeth from a first molar region through a second molar region. One or more arch wires are infused and rigidly anchored within the lingual side of the arch tray. Each of the arch wires comprises a surface pre-infused with a polymeric material for rigidly bonding to the lingual side of the arch tray.

### Summary of the Invention

Current removable appliances, while offering certain hygiene benefits, can also have shortcomings related to treatment efficacy. Polymeric shells, for example, tend to be limited in their ability to correct particular dental malocclusions. Further, extrusion, gap closure, and molar tooth movement can be difficult or impossible to achieve because these shells rely on relatively weak mechanical retention between the shell and the teeth. More traditional brackets and wires, when used with springs, Class II correctors, or elastics, are able to produce these movements. This can be a result of the bracket being allowed to slide along the archwire, which serves to guide the tooth movement. This sliding movement does not occur in aligner therapy; rather, the tooth must remain in intimate contact with the cavity in the aligner. On the other hand, retainer-like appliances that use springs or clasps that engage with teeth suffer from many of the same shortcomings as polymeric shells, as the tooth can only move as fast as the shell appliance. These appliances, as a whole, may not positively engage with the teeth in a manner that allows precise torque, angulation, rotation, and translation control. Further, many of these appliances are generally not aesthetic as they use a facial wire residing over the facial surface of the teeth to prevent proclination of the teeth.

The present disclosure provides a coordinated adjustment appliance that can provide molar tooth movement, precise tooth movement, and general aesthetics. The appliance of the present disclosure treat the less visible posterior teeth with an anchored brace system or fixed section of the appliance. The anterior teeth (e.g., incisors and cuspids) are treated with an aesthetic shell appliance system. Both appliance systems share an attachment to at least one tooth of the patient's dental arch so that coordinated movement can be achieved. The shell appliance can be programmed for small, successive movements on the anterior teeth as is typical of aligner treatment, while the anchored system can provide more complex movements (e.g., distalization, extraction, space closure, extrusions) for the anchored teeth.

The present invention provides an orthodontic appliance defined by the features of claim 1. Further configurations of the invention are defined by the features of the dependent claims.

The present disclosure further discusses an orthodontic assembly for a patient's dental arch including a tray having receptacles each corresponding to a number of a patient's teeth, the tray having at least one receptacle configured to reposition one of the patient's teeth from a first position to a second position. The assembly further includes a first anchor having a bonding base and a body including a first slot extending across a face thereof and a second anchor having a bonding base and body including a second slot extending across a face thereof. An arch member is received in the first and second slots, and wherein the tray includes a receptacle removably coupled to and at least partially enveloping at least a portion of the first anchor.

The present disclosure further discusses an orthodontic assembly for a patient's dental arch including a tray having receptacles each corresponding to a number of a patient's teeth. The assembly further includes a first anchor having a bonding base and a body including a first slot extending across a face thereof, as well as a second anchor having a bonding base and body including a second slot extending across a face thereof. An arch member is ligated in the first and second slots, and the tray includes at least one receptacle removably coupled to and at least partially enveloping at least a portion of the first anchor.

The present disclosure further discusses a method for installing an orthodontic appliance, the method comprising obtaining a first anchor, a second anchor, and an arch member. The method further comprising installing the first anchor on a first tooth, the second anchor on a second tooth, and coupling the arch member to the first and second anchors. The method further comprises installing a removable tray over at least the first tooth and first anchor, the tray including a receptacle configured to reposition the first tooth from a first position to a second position.

As used herein, "anterior teeth" includes the central incisors, lateral incisors, canines, and first bicuspids.

As used herein, "posterior teeth" includes the second bicuspid, the first molar, the second molar, and the third molar (if patient still retains wisdom teeth).

The words "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the disclosure.

In this application, terms such as "a", "an", and "the" are not intended to refer to only a singular entity, but include the general class of which a specific example may be used for illustration. The terms "a", "an", and "the" are used interchangeably with the term "at least one." The phrases "at least one of' and "comprises at least one of' followed by a list refers to any one of the items in the list and any combination of two or more items in the list.

As used herein, the term "or" is generally employed in its usual sense including "and/or" unless the content clearly dictates otherwise.

The term "and/or" means one or all of the listed elements or a combination of any two or more of the listed elements.

Also herein, all numbers are assumed to be modified by the term "about" and preferably by the term "exactly." As used herein in connection with a measured quantity, the term "about" refers to that variation in the measured quantity as would be expected by the skilled artisan making the measurement and exercising a level of care commensurate with the objective of the measurement and the precision of the measuring equipment used.
Also herein, the recitations of numerical ranges by endpoints include all numbers subsumed within that range as well as the endpoints (e.g., 1 to 5 includes 1, 1.5, 2, 2.75, 3, 3.80, 4, 5, etc.).

As used herein as a modifier to a property or attribute, the term "generally", unless otherwise specifically defined, means that the property or attribute would be readily recognizable by a person of ordinary skill but without requiring absolute precision or a perfect match (e.g., within +/- 20 % for quantifiable properties). The term "substantially", unless otherwise specifically defined, means to a high degree of approximation (e.g., within +/- 10% for quantifiable properties) but again without requiring absolute precision or a perfect match. Terms such as same, equal, uniform, constant, strictly, and the like, are understood to be within the usual tolerances or measuring error applicable to the particular circumstance rather than requiring absolute precision or a perfect match.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Brief Description of the Drawings

FIG. 1 is an isometric view of a coordinated adjustment appliance according to one embodiment of the present disclosure;
FIG. 2 is an isometric view of the coordinated adjustment appliance of FIG. 1, with the removable section disengaged and removed from the anterior teeth;
FIG. 3 is a top view of the coordinated adjustment appliance of the FIG. 1.
FIG. 4 is a cross-sectional view of a receptacle of the appliance of FIG. 1, omitting the arch member segment for clarity;
FIG. 5 is a cross-sectional view of a portion of the coordinated adjustment appliance of FIG.1, focusing on an anchor and shell engaged on a dual treatment tooth and omitting the anchor for clarity;
FIG. 6 is an isometric view of a coordinated adjustment appliance according to another embodiment of the present disclosure;
FIG. 7 is an isometric view of an anchor used in coordinated adjustment appliances of the present disclosure;
FIG. 8 is an isometric view of another anchor useful in coordinated adjustment appliances of the present disclosure;
FIG. 9 is an isometric view of a fixed section useful in coordinated adjustment appliances of the present disclosure;
FIG. 10 is an isometric view of a coordinated adjustment appliance according to another embodiment of the present disclosure; and
FIG. 11 is one potential workflow for creating a coordinated adjustment appliances of the present disclosure.

While the above-identified figures set forth several embodiments of the disclosure other embodiments are also contemplated, as noted in the description. In all cases, this disclosure presents the invention by way of representation the true scope of the invention being defined in the appended claims.

### Directional Definitions

As used herein:
"Mesial" means in a direction toward the center of the patient's curved dental arch.
"Distal" means in a direction away from the center of the patient's curved dental arch.
"Occlusal" means in a direction toward the outer tips of the patient's teeth.
"Gingival" means in a direction toward the patient's gums or gingiva.
"Facial" means in a direction toward the patient's lips or cheeks.
"Lingual" means in a direction toward the patient's tongue.

### Detailed Description of Illustrative Embodiments

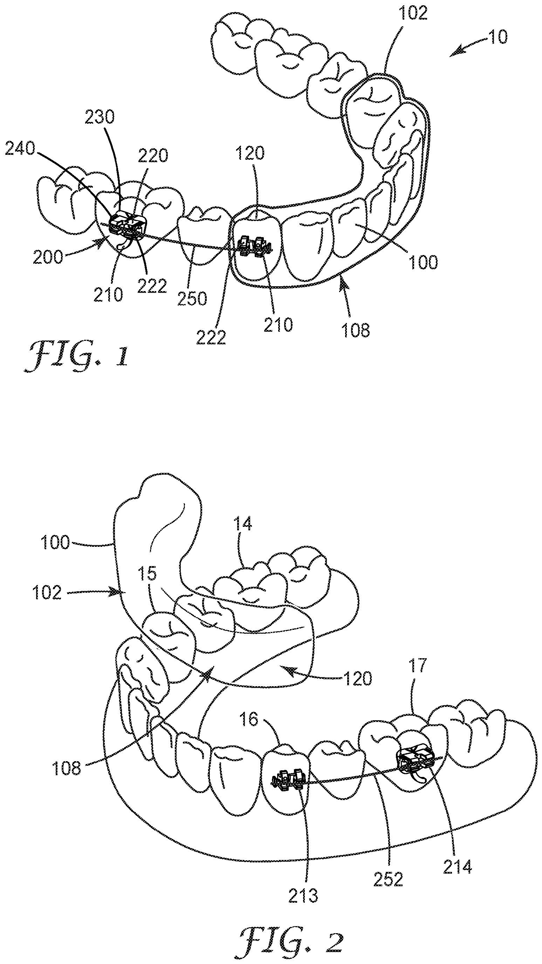

One implementation of a coordinated adjustment appliance 10 is generally depicted in FIGS. 1-3. The coordinated adjustment appliance 10 includes a removable section 100 and a fixed section 200. The fixed section includes two or more anchors 210 and at least one arch member 250. In some embodiments, the removable section 100 is one of a plurality of removable sections intermittently replaced during stages of an orthodontic treatment. The removable section 100 may comprise a polymeric concave shell having an inner cavity 102. The inner cavity 102 is shaped to receive and resiliently reposition teeth from one tooth arrangement to a successive tooth arrangement. The inner cavity 102 includes at least one receptable 108, preferably a plurality of receptacles 108, each of which is adapted to receive a respective tooth of the patient's dental arch. The receptacles 108 are spaced apart from each other along the length of the cavity, although adjoining regions of adjacent receptacles 108 can be in fluid communication with each other. In order to facilitate positioning of the teeth of the patient, at least one of receptacles 108 may be misaligned as compared to the corresponding tooth of the patient. In this manner, appliance body removable section 100 may be configured to apply rotational and/or translational forces to the corresponding tooth of the patient when the coordinated adjustment appliance 10 is worn by the patient. In some particular examples, the removable section 100 may be configured to provide only compressive or linear forces. In the same or different examples, the removable section may be configured to apply translational forces to one or more of the teeth within receptacles 108.

In some embodiments, the polymeric concave trough comprising removable section 100 fits over some or all anterior teeth present in the upper jaw or lower jaw. Typically, only certain one(s) of the teeth will be repositioned while others of the teeth will provide a base or anchor region for holding the removable section 100 in place as it applies the resilient repositioning force against the tooth or teeth to be repositioned. A removable section can accordingly be selected or designed such that the corresponding receptacle is shaped to facilitate retention of the tooth in a particular position in order to maintain the current position of the tooth. In other embodiments particularly suited for molar distalization, substantially all of the receptacles 108 in the removable section 100 are designed to retain the corresponding tooth in a current position. In such implementations, a receptacle 120 engaging an anchor 210 may still be configured to apply a repositioning force to the corresponding tooth.

The removable section can be formed from a transparent material (e.g., a transparent polymeric material). In certain implementations, removable section 100 may be formed using 3D printing or thermo-formed and trimmed, such as trimmed with 5-axis milling or laser cutting. With 3D printing, removable section 100 may be 3D printed directly by a 3D printing system, but in other examples, removable dental appliance 100 may be thermoformed over a mold of teeth formed using 3D printing.

The fixed section 200 is shown in FIG. 1 connected to certain posterior teeth of the patient's lower arch. The fixed section 200 includes anchors 210, where each anchor 210 includes an anchor body 220 and a base 230 adapted to connect the anchor 210 to a surface of a tooth. As is further described herein, the arch member 250 is releasably connectable to the anchors 210, preferably to the anchor body 220.

Optionally and as shown, the base 220 and body 230 are integral components. In certain embodiments, the base 220 and body 230 may be integrally made, for example, via machine or mold from a polymeric material as disclosed in U.S. Patent No. 4,536,154 (Garton, et al.), a ceramic material such as a fine-grained polycrystalline alumina as disclosed in U.S. Patent No. 6,648,638 (Castro, et al.), or a polymer-ceramic composite such as glass-fiber reinforced polymeric composites as disclosed in U.S. Patent Nos. 5,078,596 (Carberry, et al.) and 5,254,002 (Reher, et al.). Other suitable materials include, for example, metallic materials (such as stainless steel, titanium, and cobalt-chromium alloys) and plastic materials (such as fiber-reinforced polycarbonate).

The base 230 of the anchor 210 can have a tooth facing surface contour that is customized to fit any suitable surface of a tooth. For example, in one or more embodiments, the base 230 has a tooth-facing surface contour that is customized to fit a lingual surface of a given tooth. Having a customized base 230 can allow the anchor 210 to be configured with a lower profile for patient comfort. Any suitable technique or combination of techniques can be utilized to form customized bondable anchors, e.g., the techniques described in U.S. Patent Nos. 6,776,614 (Wiechmann, et al.), 7,811,087 (Wiechmann, et al.), and 7,850,451 (Wiechmann, et al.), and U.S. Patent Publication No. 2005/0277084 (Cinader, Jr., et al.). In one or more embodiments, the base 230 of one or more anchors 210 can include any suitably shaped surface that is not necessarily customized to fit a particular surface of a tooth, i.e., a "generic" base. In other implementations, the base 220 may include a fixed, compressible material to assist in filling gaps between the anchor base 220 and the tooth structure. Suitable compressible materials are described in US Publication No. 2009/0233252 (Cinader, Jr.).

The anchor 210 can be attached to the surface of corresponding tooth using any suitable technique or combination of techniques. For example, the anchor 210 can be bonded to the surface of the tooth using a suitable adhesive or cement. The anchor 210 need not be adhesively bonded. For example, one or more anchors 210 may be welded to an orthodontic band and the band subsequently secured to a respective tooth using a suitable band cement. In one or more embodiments, anchors 210 are bondable lingual buttons or other commercially available off-the-shelf bondable appliances. Further, anchors 210 may be formed entirely from a curable composite dental material, such as TRANSBOND brand light cure adhesive (available from 3M Company, St. Paul, MN), and cured in vivo on the patient's teeth using techniques such as those described in U.S. Patent Application Publication No. 2007/0031774 (Cinader, Jr., et al.).

The anchor body 220 has a facial surface 222 and an elongated slot 240 extending in a generally mesial-distal direction across the facial surface 222 of the body 220. The arch member 250 is received in the slot 240 and typically has a generally rectangular cross-section that substantially corresponds with the dimensions of the walls of the slot 240. A close correspondence between the dimensions of the arch member 250 and the slot 240 can provide for a precise coupling between the arch member 250 and anchor 210, giving the treating practitioner a high degree of control over the movement of the anchored teeth. In coordinated adjustment appliances of the present disclosure, other arch member geometries can be used that do not closely approximate the dimensions of the slot walls.

In the embodiment depicted in FIGS. 1-3 (and best illustrated in FIG. 2), the fixed section 200 includes a first anchor 211, a second anchor 212, a third anchor 213, and a fourth anchor 214. The first anchor 211 includes an anchor body 220 and a base 230 adapted to connect the respective anchor to a surface of a first tooth 14, in this case the second molar of the left quadrant. The second anchor 212 includes an anchor body 220 and a base 230 adapted to connect the second anchor to a surface of a second tooth 15, in this case the first bicuspid of the left quadrant. The third anchor 213 can include an anchor coupling 220 and a base 230 adapted to connect the third anchor 213 to a surface of a third tooth 16, in this case the first bicuspid of the right quadrant. The fourth anchor 214 can include an anchor coupling 220 and a base 230 adapted to connect the fourth anchor 214 to a surface of a fourth tooth 17, in this case the second molar of the right quadrant. Further, the arch member 250 can include a first arch member segment 251 coupling the first and second anchors 211, 212, and a second arch member segment 252 connecting the third and fourth anchors 213, 214. Each arch member segment 251, 252 can be releasably connectable to the corresponding anchors.

The arch member segments 251, 252 can provide a corrective force or forces to one or more teeth of a patient through the anchors 211-214 to provide an orthodontic treatment or series of treatments to the teeth of a patient. The arch member segments 251, 252 can include any suitable material or combination of materials that provide a wide range of material properties such as stiffness and resiliency. For example, the arch member body 251, 252 can include metallic material, polymeric material, glass material, and combinations thereof. In one or more embodiments, the arch member segment 251, 252 can include at least one of nitinol, stainless steel, nickel titanium, and beta titanium. The arch member segments 251, 252 can be a unitary body or can include one or more layers of materials. Further, each arch member segment 251, 252 can be unitary along its length.

Each arch member segment 251, 252 can also be individually configured based on the needs of the practitioner. For example, a given arch member segment 251, 252 can be made from stainless steel when a high level of corrective force is desired, nickel titanium for a lower level of force, and beta titanium for an intermediate level of force. In one or more embodiments, one or both arch member segments 251, 252 can include other materials, including non-metallic materials such as polymers or filled composites. Furthermore, the cross-sectional geometry of each arch member segment 251, 252 can be tailored to provide the desired corrective force or forces. For example, the shape and/or cross-sectional dimensions (e.g., thickness) of the any given arch member segment 251, 252 can be tailored to provide the desired corrective force or forces. In certain embodiments, each arch member segment 251, 252 may exhibit different material properties and/or geometries, depending on the desires of at least one of the patient and the practitioner.

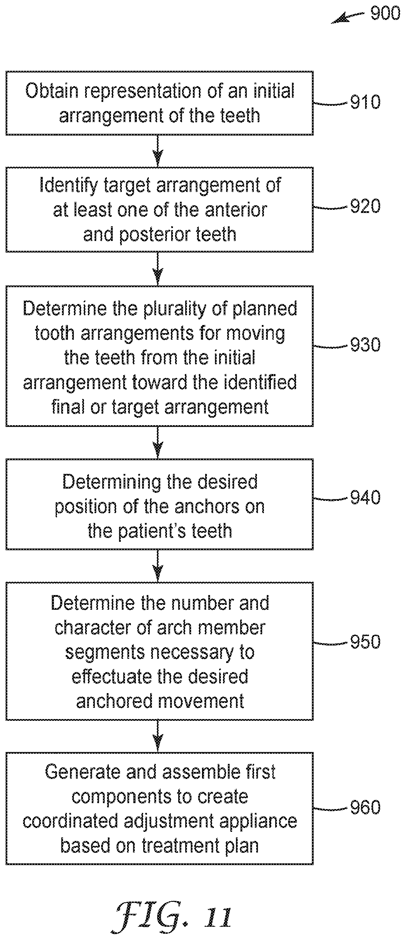

The arch member segments 251, 252 can include any suitable cross-sectional geometry, e.g., shape, area, orientation, etc. The cross-sectional geometry can be constant or vary along a length of the given arch member segment 251, 252. Either or both arch member segments 251, 252 can also include any suitable cross-sectional shape, e.g., polygonal (e.g., triangular, rectangular, etc.), elliptical, etc. The cross-sectional shape of a given arch member segment 251, 252 can be uniform along a length of the body, or in other implementations the shape may vary. Further, either or both arch member segments 251, 252 can include a uniform cross-sectional area or a cross-sectional area that varies along the length of the body. In certain applications, an arch member segment can be a section separated from a conventional archwire. In other applications, the archwire section can includes variations in cross-sectional dimensions as set forth in Figures 11 and 12 of International Publication No. WO2016/105466.

The forces required to connect and disconnect arch members from the anchor body can be sufficiently low to allow easy insertion and removal of the arch member by the patient. In one or more embodiments, these forces can be sufficiently high such that the arch member segment connects to the patient's dental structure and does not unintentionally detach from any of the anchors 210 during treatment. In one or more embodiments, the anchor bodies 220 are adapted to yield an engagement force that is as low as possible. In one or more embodiments, the disengagement forces are neither too high such that disengagement causes patient discomfort nor too low such that spontaneous disengagement occurs during treatment. The optimal values for engagement and disengagement forces may vary considerably from tooth to tooth and depend in part on the configuration of the arch member segment 251, 252. In one or more embodiments, the forces required to disconnect either or both arch member segments 251, 252 can be such that only a practitioner can remove the arch member 250 with the use of hand instruments or other implements.

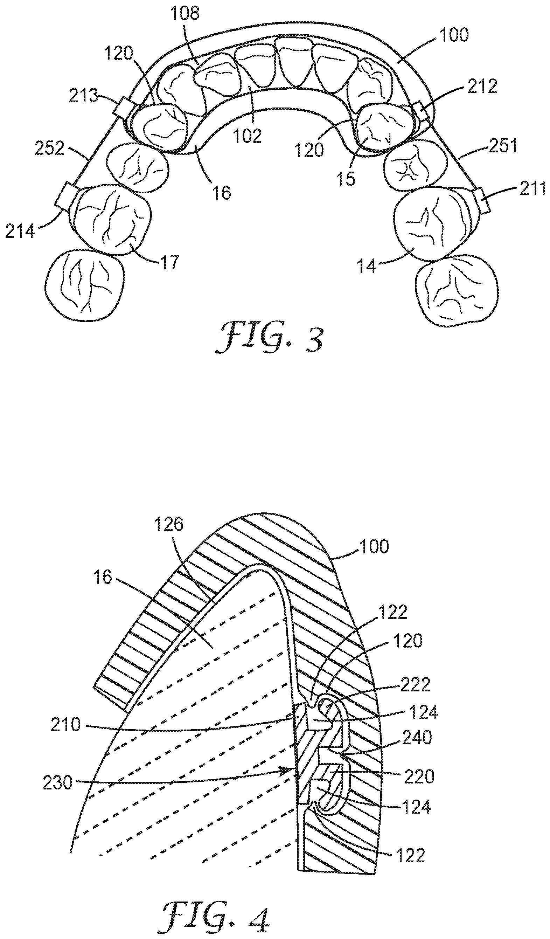

As depicted in FIG. 3, the first and third anchors 211, 213 comprises a molar appliance, while the second and fourth anchors 212, 214 each comprises a conventional orthodontic bracket. Though the fixed section 200 is depicted as bonded to the labial surfaces of the patient's posterior teeth, it is also possible for at least one if not all anchors 211-214 to be bonded to the lingual surfaces of the patients teeth. Particularly suitable anchors for bonding to the lingual surfaces of the teeth may be found, for example, in International Publication No. WO2016/149007 and International Publication No. WO2016/105466. Though also suited for bonding to the lingual surfaces of the teeth, the arch member and anchor systems in the above co-pending applications can be well suited for labial bonding and use in the coordinated adjustment appliances of the present disclosure. In certain circumstances and depending on practitioner or patient preferences, labially bonding of an anchor having a relatively large buccal height may be more comfortable for the patient.

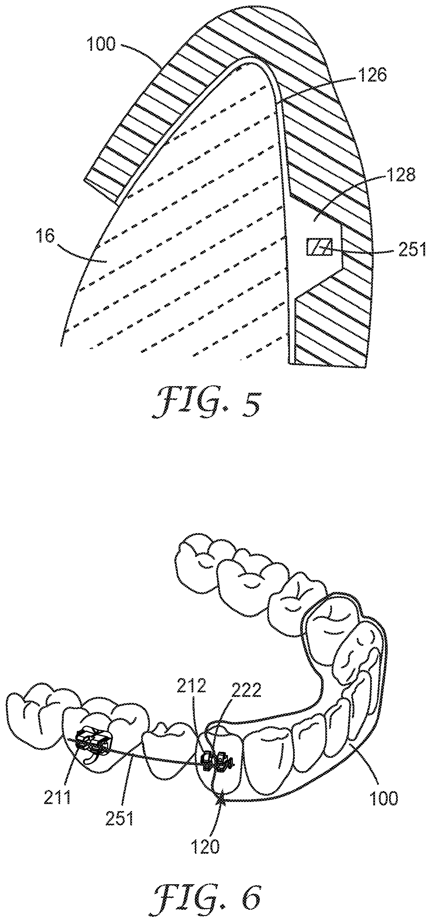

Turning to FIG. 4, a cross-sectional view of the enveloping receptacle 120 demonstrates the interplay between anchor coupling and eased disengagement. The enveloping receptacle 120 extends over at least a portion of the facial surfaces of the anchor body 220. In the embodiment depicted in FIGS. 1-3 and 4, the enveloping receptacle 120 extends over all facial surfaces, in contrast to the embodiment of a coordinated adjustment appliance depicted in FIG. 6, which features an enveloping receptacle that extends over only certain facial surfaces 222 of the anchor 210 located adjacent the covered anterior teeth. In certain circumstances, extending over only a portion of the facial surfaces 222 of the anchor body 220 may be sufficient to effectuate desired movement and may ease disengagement of the removable section 100 from the anchor 210. While the ease of disengagement can be desirable, having an enveloping receptacle 120 extend over all the facial surfaces of the anchor body 220 may aid in providing coordinated movement, particularly when the tooth 16 is intended to act as an anchor relative to other teeth in the arch. In yet other implementations, the enveloping receptacle 120 may extend only partially over the occlusal, facial surfaces of anchor body 220, such that a gingival portion of the anchor body 220 is exposed.

The geometry of the enveloping receptacle 120 may be selected or shaped to resiliently reposition a dual treatment tooth along a defined movement path. As used herein, a "dual treatment tooth" is a tooth that includes an anchor and is in contact with a receptacle when a coordinated adjustment appliance is received on the dental arch. The dual treatment tooth is typically the first or second bicuspid, but may be a different posterior tooth (e.g., a first molar) or an anterior tooth. The enveloping receptacle 120 includes engagement regions 122 and relief regions 124 proximate the anchor body 220, as well as tooth contacting regions 126. The engagement regions 122 couple the removable section 100 to the anchor body 220, providing for coordinated forces to effect particular tooth movements. The enveloping receptacle 120 can be configured to further or additionally apply a displacement force to the tooth 16 in conjunction with the anchors 210 and arch member segments 251, 252. Such coordinated movement force can be applied through engagement regions 122, as well as tooth contacting regions 126. In this manner, displacement force can be directed to a tooth (or plurality of teeth) that is the net result of action by both the removable section 100 and the fixed section 200. This may occur where both the enveloping receptacle 120, a given arch member segment 251, 252, and an anchor 210 impart movement forces to the tooth 16. In an example, one of the anchor 210 and the enveloping receptacle 120 may contact the tooth and act as a leverage point or point of resistance to the tooth that affects the movement force applied by the other orthodontic component. With such dual, coordinated application of force(s), treatment may be enhanced so as to allow improved movements (e.g., better translation, reduced tipping, etc.) than might be accomplished using braces (or aligners) alone.

The relief regions 124 can be shaped or designed to facilitate placement of the removable section 100 on the patient's teeth, while minimizing unwanted contact between the cavity 102 and the fixed section 200. For example, the relief region 124 may be shaped to minimize contact between the cavity 102 and anchor 210 that might make placement of the removable section over teeth difficult or potentially damaging to the removable section 100 or fixed section 200 structure.

The relief region 124 can include various shapes or designs, and may include, for example, a protrusion, bubble, envelope, slot shape and the like. The relief portion 124 may be defined by a continuous or substantially continuous portion of the aligner or material, or may be composed at least partially or wholly of one or more materials different from material(s) forming other parts of the aligner. In some instances, a relief portion may form an open portion, so as to form a window extending from the exterior of the concave trough 102 to the cavity 104. A relief region 124 may include or define an insertion path to receive an anchor and an arch member segment, so the aligner avoids contacting or clipping the attachment structure. Thus, the relief region 124 can be designed to reduce or minimize unwanted contact that might disrupt or damage the anchor positioned on a tooth, or otherwise disrupting the fixed section.

Engagement between a removable section and an arch member segment may disrupt the desired tooth movement. In the present invention, the relief regions 124 are designed such that the enveloping receptacle makes minimal or no direct contact with the arch member segment, either during wear or removal/installation. Such accommodation can protect against the arch member segment becoming dislodged or distorted during wear or during removal/insertion. As can be appreciated by reference to FIG. 5, the receptacle 120 includes relief regions 128 adjacent the arch member segment 251. The adjacent relief regions 128 can include the same general cross-sectional shape as the arch member, but may have larger dimensions to accommodate both anchor movement and removal/seating of the removable section 100. Furthermore, the adjacent relief regions 128 may include pitched or canted surfaces to direct the shell to the proper position relative to the arch member 251.

While avoiding excess contact between the arch member segment 250 and the removable section 100 is often of primary consideration, it is also advantageous under certain circumstances to minimize contact between the anchor body 220 and enveloping receptacle 120. The engagement regions 122 should be configured to couple the bracket only to the extent sufficient to effect the desired tooth movement. This aim can be challenging when the anchor body 220 includes several undercuts, tiewings, and other intricate structure (e.g., an accessible archwire slot) at or proximate the facial surface. These typical orthodontic bracket features provide multiple points of potential engagement with the enveloping receptacle 120, and while useful during treatment may nonetheless introduce undesirable failure modes into either or both the insertion and removal efforts. For example, the patient or treating practitioner may move the removable section in such a manner that a portion of the enveloping receptacle is caught on a tiewing or portion of the archwire slot. Continued application of force after this point may not only distort the enveloping receptacle 120 of other portions cavity 102, but may also dislodge the anchor base 230 from the tooth or the arch member segment 250 from the anchor body 220.

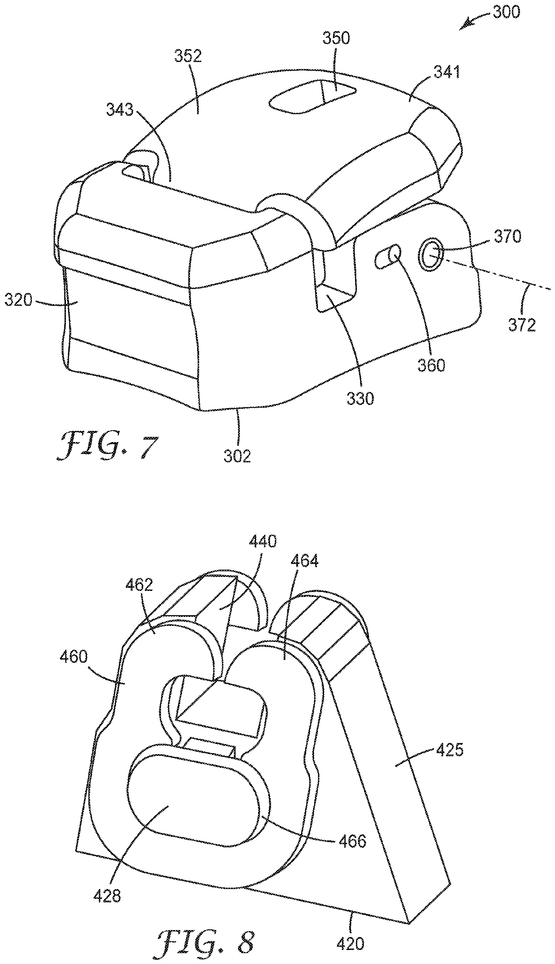

The optimization of engagement between removable section 100 and fixed section 200 may be realized with various self-ligating orthodontic brackets. These appliances generally use a clip, spring member, door, shutter, bail, or other ligation mechanism built into the bracket itself to retain the archwire in the slot, thereby obviating use of a separate ligature. An exemplary self-ligating bracket particularly well suited for use as an anchor in coordinated adjustment appliances of the present disclosure is depicted in FIG. 7. The self-ligating anchor 300 has a base 302 and a body 320, with a slot 330 extending across the facial surface of the body. Anchor 300 includes a latch assembly that includes a door 341 and lock (not shown) aligned about a hinge axis 372 and rotatable about hinge 370. The door 341 of the latch assembly is rotatable about the hinge 370 between open and closed orientations, so that when the door 341 is closed an arch member segment (typically a section of a conventional archwire) is held captive in the slot 330. The door 341 includes a lingual surface (not shown) opposite a facial surface 352. The door 341 includes an occlusal edge region 343 that extends over the slot 330 when the latch assembly is in a closed position. Accordingly, the lingual surface beneath the occlusal edge region 343 will contact the archwire, if such contact is prescribed, when the archwire is received in the archwire slot 330.

Notably, the door 341 lacks a clip or other structure for securing the latch assembly 340 to the body 320 on the occlusal side of archwire slot 330. The interaction of lock with the lingual surface is alone sufficient to arrest the rotation of the door 341 in the desired state. The lock minimizes or prevents rotation of the occlusal edge 343 towards the archwire slot while the door 341 is in the open orientation, keeping the latch assembly from obscuring access to the archwire slot 330 as long as the locking surface is engaged. This dramatically reduces the risk to the practitioner of the door 341 inadvertently closing during seating of the archwire. Similarly, the lock minimizes or prevents inadvertent opening when the archwire is secured in the archwire slot 330 during treatment. These features, at least in part, serve to limit the number of recesses and undercuts on or proximate to the facial surface of the body 320, easing disengagement between the anchor 300 and an enveloping receptacle 120. Other aspects and alternatives for the structure and operation of anchor 300 may be found in International Publication No. WO2016007646 (Yick, et al.). Other exemplary, particularly suitable self-ligating bracket configurations for use as anchors in the present disclosure may be found in US Patent No. 7,963,767 (Lewis, et al.) and US Patent Publication No. 20150223913 (Yick, etal.).

In other implementations, the anchor body 320 can include structure that also allows for traditional methods of ligation (including tiewings, and undercuts) used to retain an archwire in a bracket slot. Ligation can be achieved, for example, by securing an elastomeric o-ring or ligature wire beneath the undercuts, over an arch member received in the slot, and beneath the tiewing. The undercuts and tiewings may also be used to secure a power chain to two or more anchors if so desired. In such implementations, the relief regions of the enveloping receptacle may be larger than the engagement regions, leaving the tooth contacting regions of the receptacle to effect the greater tooth displacement force.

FIG. 8 is a perspective view of another embodiment of an anchor body 420 well suited for use in coordinated adjustment appliances of the present disclosure. The anchor body 420 includes at least one clip 460 coupled to the mesial-distal sides of the anchor body 420, with the clip(s) 460 adapted to surround a slot 440. The anchor body 420 includes a pair of clips 440 in the embodiment depicted in FIG. 6. Each clip 460 includes a pair of arm portions 462, 464 that can extend in generally labial-lingual or occlusal-gingival directions and then bend outwardly away from each other. A protrusion 428 on each of the mesial and distal faces of the anchor body 420 extends through the clips 460, thereby retaining the clips 460 on the anchor body 420.

The anchor body 420 further includes a canted, generally planar gingival surface 425. The canted surface 425 provides a sort of ramp for an engagement region 122 or other enveloping receptacle 120 surface to travel as the removable section is inserted on or removed from the dental arch. Notably, the canted surface 425 lacks any recesses or other regions that may inadvertently engage with a receptacle of a removable section. In other embodiments, the canted surface may include some recesses or undercuts to interact with an engagement region.

The clips 460 are shown in their normal, relaxed orientations in FIG. 8. However, the arm portions 462, 464 of each clip 460 are movable away from each other in order to admit an arch member segment (not shown) into the slot 440. The smooth, outer edge of the arm portions 462, 464 enables each clip 460 to engage an arch member by pressing the arch member segment against the outer curved edges of the arm portions 462, 464. As pressure is exerted by the arch member segment on the curved edges, the arm portions 462, 464 deflect away from each other in order to admit the arch member segment into the slot 440.

Once the arch member segment engages the walls of the slot 440, the arch member segment is releasably connected to the anchor 420. In one or more embodiments, the width of the clip 460 in the area between arm portions 462, 464 and protrusion receiving region 446 is less than or equal to a width of the slot 440. Optionally, inner surfaces of the clips may be roughened or knurled or provided with serrations, grooves or other structure to facilitate a secure, non-sliding connection between the clips 460 and the arch member segment.

Optionally, each of the clips 460 is cut from a flat section of metallic stock material. Suitable metallic materials include shape memory alloys such as alloys of nitinol and beta-titanium. The clips 460 may be cut from the stock material using a stamping, die cutting, chemical etching, EDM (electrical discharge machining), laser cutting or water jet cutting process. As another option, each clip 460 could be formed and then heat-treated to set its shape. Other suitable clips and clip features are described in U.S. Patent Nos. 7,014,460 (Lai, et al.), 7,252,505 (Lai), 7,367,800 (Lai, et al.), 8,827,698 (Lai, et al).

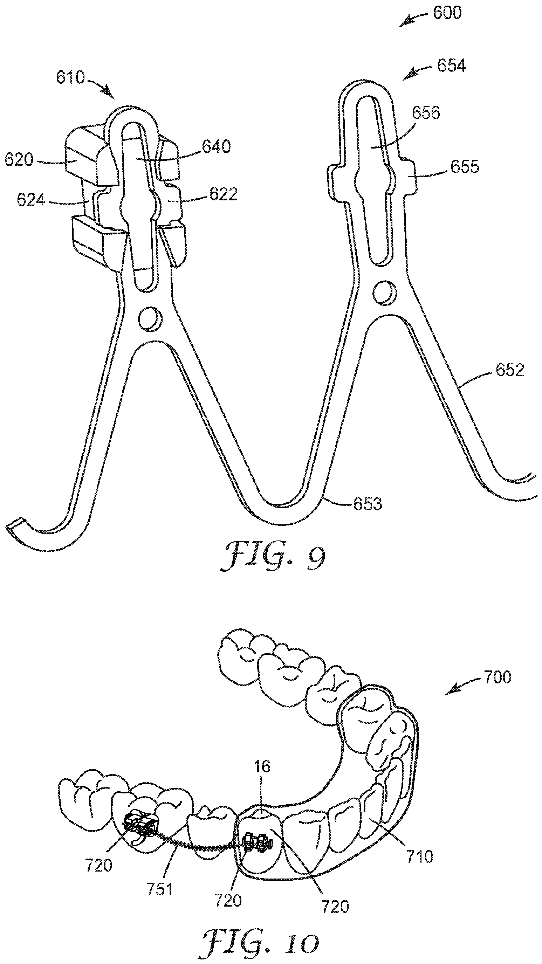

FIG. 9 is a schematic perspective view of a portion of another embodiment of a fixed section 600 of a coordinated adjustment appliance. All of the design considerations and possibilities regarding the fixed sections of FIGS. 1-6 apply equally to the fixed section 600 of FIG. 7. Fixed section 600 includes an arch member segment 650 that includes an arch member body 652 and one or more arch member couplings 654 connected to the body. The appliance 600 also includes one or more anchors 610 that each include an anchor body 620 and a base (not shown) adapted to connect the anchor to a surface of a tooth.

The anchor body 620 includes a slot 640 that is adapted to receive the arch member coupling 654 of the arch member 650. The slot 640 can take any suitable shape or combination of shapes. The arch member coupling 654 can include a slotted portion 656 that is adapted to be inserted into the slot 640. In one or more embodiments, the slotted portion 656 is resilient such that it can be compressed within the slot 640 and retained therein. The arch member coupling 654 can be friction-fit within the slot 640 of the anchor body 620. The arch member coupling 654 can also include one or more tabs 655 that are adapted to be received by the slot 640 of the anchor body 620. The tabs 655 can engage the slot 640 such that the arch member segment 650 can provide, e.g., angulation to a tooth attached to the anchor 330.

The arch member body 652 includes one or more nonlinear (e.g., arcuate) portions that, in the illustrated embodiment, are V-shaped portions 653 that provide a spring-like effect to the arch member segment 650 and are substantially offset in a gingival direction from the anchors. Any suitable number of V-shaped portions can be formed between arch member couplings 654. In one or more embodiments, the V-shaped portions 653 can lie in a plane that is substantially parallel to a surface of a tooth that is connected to the arch member segment 650. As used herein, the term "substantially parallel" means that any nonlinear portions (e.g., V-shaped portions 653) lie in a plane that forms an angle with the surface of the one or more teeth that are connected to the appliance that is no greater than about 10 degrees. The V-shaped portions 653 can provide any suitable corrective force to one or more teeth that are attached to the arch member segment 650.

Although not shown, one or more portions of the arch member 650 can include different geometries between arch member couplings 654 to provide one or more corrective forces that are different from the corrective forces provided by the V-shaped portions 653. Further, a cross-sectional geometry of the arch member body 652 can vary along the length of the arch member body in any suitable portion or portions, e.g., the portions of the body that include V-shaped portions 653. In one or more embodiments, a mesial-distal distance between one or more arch member couplings 654 can be selected such that the V-shaped portion 653 has a selected apex angle.

In coordinated adjustment appliances featuring fixed section 600, the enveloping receptacle of each removable section is configured to avoid engagement with the arch member coupling 654 as well as arch member body 652, at least to the extent that engagement can debond or disrupt the fixed section when the removable section 100 is inserted, removed, or repositioned. The enveloping receptacle can accordingly feature engagement regions proximate the mesial and distal edges 622, 624 of the anchor body 620.

Another configuration for a coordinated adjustment appliance 700 is depicted in FIG. 10. Though only one anchored system of anchors 720 and an arch member segment 750 is depicted, the other quadrant of the dental arch may include additional anchors and arch member segments. All of the design considerations and possibilities regarding the coordinated adjustment appliance of FIGS. 1-8 apply equally to the coordinated adjustment appliance 700 of FIG. 10. In the adjustment appliance 700, however, the removable section 710 is configured to provide an anchoring retention force to support the application of the force in the generally anterior direction or posterior direction by arch member segment 751 when the coordinated adjustment appliance is worn by the patient. Here, the greater number of teeth anchored by removable section helps guard against inadvertent or unwanted movement of the anterior teeth while the posterior teeth are further separated or converged. In particular, the enveloping receptacle 720 helps the bicuspid 16 to resist motion caused by the arch member segment 751, allowing the anchored molar to move distally.

The arch member segment 751 in this or other embodiments can include one or more flexible springs that allows longitudinal movement (i.e., in a direction generally along the length of the arch member body). In one or more embodiments, the spring can be resilient and can deliver tensile or compressive forces in the longitudinal direction. Various types of springs may be used, including Z-springs, coil springs, omega loops, pushrods, or any combinations thereof.

In general, the various embodiments of arch members and anchors can be used interchangeably to provide selected treatments. For example, in one exemplary embodiment, one or more teeth of a patient may be connected to anchors 210 of appliance 10 illustrated in FIGS. 1-5, and one or more additional teeth may be connected to the anchors 300 illustrated in FIG. 7. In one or more embodiments, different embodiments of appliance systems can be used for different phases of treatment. For example, the fixed section 600 of FIG. 9 may be utilized in an early treatment phase, and the fixed section 200 of FIGS. 1-6 may be utilized in a later treatment phase of the same patient. In yet other embodiments, different anchor and arch member combinations may be used on different quadrants of the dental arch; as an example, the arch member 750 can be used for distalization on the right quadrant, while arch members 250 or 650 can be used for gap closure on the left quadrant.

A method 900 of creating a coordinated adjustment appliance according to the present disclosure can include general steps as outlined in FIG. 11. Individual aspects of the process are discussed in further detail below. The process includes generating a treatment plan for repositioning a patient's teeth. Briefly, a treatment plan will include obtaining data representing an initial arrangement of the patient's teeth (Step 910), which typically includes obtaining an impression or scan of the patient's teeth prior to the onset of treatment. The treatment plan will also include identifying a final or target arrangement of the patient's anterior and posterior teeth as desired (Step 920), as well as a plurality of planned successive or intermediary tooth arrangements for moving at least the anterior teeth along a treatment path from the initial arrangement toward the selected final or target arrangement (Step 930). The treatment plan can also include determining the desired position of the anchors on the patient's teeth (Step 940) and determining the number and particular geometry/composition of arch member segments necessary to effectuate the desired anchored movement (Step 950). One more adjustment appliances components (e.g., anchors, removable section, and arch member segments) can be generated and assembled based on treatment plan and administered to the patient (Step 960).

A removable section of a coordinated adjustment appliance can be designed and/or provided as a single appliance or as part of a set or plurality of appliances. Each appliance may be configured so a tooth-receiving cavity has a geometry corresponding to an intermediate or final tooth arrangement intended for the appliance. The patient's anterior teeth (or in less typical circumstances, posterior teeth) can be progressively repositioned from an initial tooth arrangement to a target tooth arrangement by modifying the geometry of the removable section (e.g., the tooth-receiving cavity geometry) over the patient's teeth. A target tooth arrangement can be a planned final tooth arrangement selected for the patient's teeth at the end of all planned orthodontic treatment. Alternatively, a target arrangement can be one of many intermediate arrangements for the patient's teeth during the course of orthodontic treatment. As such, it is understood that a target tooth arrangement can be any planned resulting arrangement for the patient's teeth that follows one or more incremental repositioning stages. Likewise, an initial tooth arrangement can be any initial arrangement for the patient's teeth that is followed by one or more incremental repositioning stages. Two or more removable sections can be generated all at the same time or in sets or batches. The patient wears each removable section for a fixed length of time as instructed by their prescribing doctor. A plurality of different appliance configurations can be designed and fabricated prior to the patient wearing the appliance or any appliance of the series of appliances according to methods further specified below. After wearing a removable section configuration for an appropriate period of time, the patient replaces the current removable section with the next appliance in the series until all the removable sections in the series have been worn. Additional series of removable sections may be fabricated and worn until a satisfactory treatment outcome is achieved.

A similar approach may be taken with the fixed section. In certain treatments, the anchors remain bonded to the teeth for the duration of treatment. In such cases, the arch member segments may be replaced as desired or also retained for the duration of treatment. For example, the treatment may commence with an arch member segment comprising stainless steel to effectuate initial movement. After a specified period of time or based on, for example, practitioner analysis or manufacturer recommendation, the stainless steel arch member segment may be replaced with an arch member segment comprising nitinol or other shape memory material, or a nitinol arch member replaced with a stainless steel segment. Other treatment plans may feature different anchors for a given phase of treatment.

### Generating the Treatment Plan

The steps of a process for defining and generating a treatment plan including coordinated adjustment appliances for orthodontic treatment of a patient can be implemented as computer program modules for execution on one or more computer systems. Systems and methods for generating a treatment plan can be found, for example, in U.S. Patent Nos. US 7,435,083 (Chisti, et al.), US 7,134,874 (Chisti, et al.), U.S. Patent Publication Nos. 2009/0286296 (Wen, et al.); 2010/0260405 (Cinader, Jr.) and U.S. 2012/0061868 (Raby, et al.).

As an initial step, a mold or a scan of patient's teeth (and potentially mouth tissue) is acquired. This generally involves taking casts of the patient's teeth and gums, and may in addition or alternately involve taking wax bites, direct contact scanning, x-ray imaging, tomographic imaging, sonographic imaging, and other techniques for obtaining information about the position and structure of the teeth, jaws, gums and other orthodontically relevant tissue. A digital data set is derived from this data that represents an initial (e.g., pretreatment) arrangement of the patient's teeth and other tissues. A computer model of the arch may then be re-constructed based on the scan data.

One exemplary technique for acquiring at least a portion of the initial arrangement (or any subsequent arrangement) is digital scanning. A virtual dental model representing the patient's dental structure can be captured using a digital intraoral scan or by digitally scanning an impression or other physical dental model. The digital images may be provided using a hand-held intra-oral scanner such as the intra-oral scanner using active wavefront sampling developed by Brontes Technologies, Inc. (Lexington, MA) and described, e.g., in PCT Publication No. WO 2007/084727 (Boerjes, et al.). Scanning devices which allow for providing a virtual dental model as digital data are, for example, available under the designations Lava™ Scan ST and Lava™ Chairside Oral Scanner C.O.S, both from 3M Deutschland GmbH. Alternatively, other intra-oral scanners or intra-oral contact probes may be used, such as the 3M True Definition™ Scanner, available from 3M Company. In one or more embodiments, other intra-oral scanners or intra-oral contact probes may be used. As another option, the digital structure data may be provided by scanning a negative impression of the patient's teeth. As still another option, the digital structure data may be provided by imaging a positive physical model of the patient's teeth or by using a contact probe on a model of the patient's teeth. The model used for scanning may be made, for example, by casting an impression of a patient's dentition from a suitable impression material such as alginate or polyvinylsiloxane (PVS), pouring a casting material (such as orthodontic stone or epoxy resin) into the impression, and allowing the casting material to harden. Any other suitable scanning technique may be used for scanning the model or the actual dentition, including X-ray radiography, laser scanning, computed tomography (CT), magnetic resonance imaging (MRI), and ultrasound imaging. Other possible scanning methods are described, e.g., in U.S. Patent Application Publication No. 2007/0031791 (Cinader, Jr., etal.).

The initial digital data set, which may include both raw data from scanning operations and data representing surface models derived from the raw data, can be processed to segment the tissue constituents from each other including defining discrete dental objects. For example, data structures that digitally represent individual tooth crowns can be produced. In some embodiments, digital models of entire teeth are produced, including measured or extrapolated hidden surfaces and root structures.

Once the initial data set is processed, the desired positions of the anterior and posterior teeth are determined, with particular focus on any dual treatment teeth. Desired final positions of the anterior teeth (e.g., the teeth to be treated using a removable section of the coordinated adjustment appliances), can be received, e.g., from a practitioner in the form of a descriptive prescription, can be calculated using orthodontic prescriptions, or can be extrapolated computationally from a clinical prescription. With a specification of the desired final positions of the teeth and a digital representation of the teeth themselves, the final position and surface geometry of each tooth can be specified to form a complete model of the teeth at the desired end of treatment or treatment stage. The result of this step is a set of digital data structures that represents a desired and/or orthodontically correct repositioning of the modeled teeth relative to presumed-stable tissue. The teeth and surrounding tissue are both represented as digital data. Further details on software and processes that may be used to derive the target dental arrangement are disclosed, e.g., in U.S. Patent. No. 6,739,870 (Lai, et al.), and U.S. Patent Application Publication Nos. 2005/0170309, 2006/0073435, 2006/0073436, 2006/0105286, and 2008/0233531 (Raby, etal.).

In some implementations, the desired final positions of anchored teeth may be determined by the placement and/or orientation of the anchors. There are a variety of treatment planning systems which allow for designing and/or placing virtual objects relative to a virtual dental arch by computer aid. Such systems are, for example, described in US Patent Nos. 6,776,614 (Wiechmann, et al.), 7,210,929 (Raby, et al.), 7,811,087 (Raby, et al.), and 7,993,133 (Cinader, Jr., et al.). The virtual anchors may be at least partially designed and/or retrieved from a database. Each anchor may be automatically and/or manually positioned relative to a virtual tooth in the virtual dental arch. Examples of systems for automatically placing virtual brackets on teeth, which would be relevant for placement of anchors, are described in issued U.S. patent 7,210,929 (Raby, et al.) and published U.S. Patent Application Nos. 2006/0024637 (Raby, et al.) and 2007/0238064 (Raby, et al). The placement of anchors on virtual teeth to create a combined model may be carried out by a treating professional or a technician at a location remote from the treating professional's office. For example, a technician at the appliance manufacturer's facility may use modeling software to place anchors on a model of the patient's dental arch based on standards or guidelines from an orthodontic treatment philosophy. These standards or guidelines for appliance placement may be specific to each tooth in the model. The technician may also place anchors in accordance with particular instructions provided by a treating professional. Once the technician is satisfied with the anchor positions and the resulting finished positions of the teeth, the model, together with the data representing the positions of anchors, may be transmitted to the treating professional for review. The treating professional can then either approve the technician's anchor placement positions or reposition the anchors as desired.

In some implementations, modeling software can then, for example, virtually connect anchors to virtual arch member segments and compute the final positions of the teeth based on the positions of the anchors and the arch member segments. As an alternative to moving appliances, the treating professional or technician may instead use modeling software to define the desired positions of teeth, and have the modeling software determine the suitable locations to place the anchors in order to move the teeth to those desired positions. Examples of virtual orthodontic treatment in this fashion are described, for example, in issued U.S. Patent Nos. 6,739,869 (Kopelman, et al.), 7,354,268 (Raby, et al.) and published U.S. Patent Application No. 2008/0096151 (Cinader, Jr. et al.).

The process could select pre-configured or specifically design anchors to achieve specific tooth movements. For instance, an anchor could be designed to "overcorrect" by pushing the tooth beyond its desired position/orientation. This may overcome play (or "slop") between the arch member and anchor, which typically results in tendency for an arch member (particularly an arch wire) to lose force as the tooth nears the desired position/orientation , which can result in failure to achieve a tooth treatment goal and/or increase the potential for relapse. Arch members can be designed in a similar manner. A series of arch members can be designed to move teeth sequentially, in that a new arch member configuration, geometry, or material can be selected for each stage of movement. For instance, if a tooth is blocked out of the arch, the arch members can be designed in the expectation of creating space in the arch prior to moving the blocked-out tooth into position.

Having both a beginning position and a final target position for each tooth, as well as a desired positions of the anchors, the process next defines a treatment path or tooth path for each tooth to be received and repositioned in the removable section 100. This includes at least defining a plurality of planned successive tooth arrangements for moving these teeth (typically anterior teeth) along a treatment path from an initial arrangement to a selected final arrangement.

A movement pathway for each tooth between a beginning position and a desired final position may be calculated based on a number of parameters, including the total distance of tooth movement, the difficulty in moving the teeth (e.g., based on the surrounding structures, the types and locations of teeth being moved, etc.) and other subject-specific data that may be provided. Based on this sort of information, a user or a computer program may generate an appropriate number of intermediary steps (corresponding to a number of treatment steps). In some variations, the user may specify a number of steps, and the software can map different appliance configurations accordingly. Alternatively, the movement pathway may be guided by (or set by) the user.

If the movement path requires that the teeth move more than a predetermined amount (e.g., 0.3 mm or less in X or Y translation), then the movement path may be divided up into multiple steps, where each step corresponds to a separate target arrangement. The predetermined amount is generally the amount that a removable section configuration can move a tooth in a particular direction in the time required for each treatment step. For example, the steps can be defined and calculated so that each discrete position can follow by straight-line tooth movement or simple rotation from the tooth positions achieved by the preceding discrete step and so that the amount of repositioning required at each step involves an orthodontically optimal amount of force on the patient's dentition. As with determining the desired placement of anchors, this calculation step can include interactions with the practitioner. Practitioner interaction can be implemented using a client process programmed to receive tooth positions and models, as well as path information from a server computer or web-based portal through which other steps of process are implemented.

During the treatment planning process, a simulation of the result of anchor placement on the dual treatment teeth (or tooth) may be used to establish the goal or target position of the teeth in cooperation with the expected movement due to the removable section. Otherwise the fixed section may move the anchored teeth towards a goal programmed into the fixed section, but the removable section may try to move the teeth towards a different goal, and this mismatch can lead to a poor fit of dual treatment teeth (or tooth) with the removable section and the desired coordination will not be fully achieved.

In other examples, generating the treatment plan for the removable section includes selecting the dimensions and shapes of the receptacles 108 according to a set of predefined design constraints. The set of predesigned design constraints may include one or more factors, including, but not limited to, a maximum localized force applied to one or more of the surrounded teeth, a maximum rotational force applied to one or more of the surrounded teeth, a maximum translational force applied to one or more of the surrounded teeth, a maximum total force applied to one or more of the surrounded teeth, a maximum stress and strain translated to the periodontal ligaments of the surrounded teeth, and a maximum strain applied to the removable dental appliance when worn by the patient when the surrounded teeth are in their initial positions.

In the same or different examples, determining dimensions and shapes of the removable section includes selecting thicknesses of the shell 102 in order to provide a stiffness suitable to reposition the one or more teeth of the patient from their initial positions to adjusted positions when the removable dental appliance is worn by the patient. Such selected thickness may range between about 0.25 millimeters and about 2.0 millimeters thick, such as between about 0.5 and about 1.0 millimeters thick. In some examples, a material can be selected for at least a portion of the concave shell 102 according to the predefined design constraints or to provide a desired stiffness characteristic without necessarily increasing the thickness.

Engagement and relief regions of the enveloping receptacle 120 may be designed using virtual anchor analogs, as set forth, for example, in US Publication No. 2015/0231687 (Blees, et al.) Each analog is associated with a virtual anchor of a virtual set of anchors for use in a given coordinated adjustment appliance, and in certain cases represents a modification thereof. In one embodiment, a modification step comprises increasing a three-dimensional volume represented by the virtual anchor bracket by selectively modifying only a portion of the anchor. For example the modification step may comprise a flattening or reduction of an indentation present in the anchor body shape. The modification step may further comprise at least partially filling a space between portions of the anchor shape, or adding a virtual structure to the anchor shape. Thus undercuts which may hinder insertion of the removable section or eventually prevent the removable section from being removed can be minimized or removed. Further the modification step may comprise maintaining or substantially maintaining at least a portion of the original virtual anchor shape to strike a balance between engagement and ease of installation/removal. Thus the shape of each virtual analog may substantially correspond at least partially to the shape of one virtual anchor. Removable sections made to accommodate the shape of the analog, therefore, will naturally result in additional relief regions once a physical anchor is placed in the enveloping receptacle.

As another alternative, a virtual removable section may be directly derived from the virtual combined model of anchors and teeth, using methods such as those described in US Publication No. 2011/0091832 (Kim, et al.). In one exemplar of such a method, the derivation can proceed by defining a guidance line that extends across at least a portion of the model arch and is spaced away from the arch and mounted anchors. For example, the guidance line follows a curved path that is generally parallel to the facial surfaces of the virtual analogs and generally lies in an occlusal plane. In one computer-assisted embodiment, the guidance lines are defined by tracing a line segment that connects the facial-most edges of the anchors as viewed from the occlusal direction, offsetting the line segment outwardly towards the facial direction by a certain distance and then applying a smoothing operation to the line segment. If desired, the certain distance can be used to define a desired shell thickness. The process may continue by defining a series of fitted arcs, each of which extends over the lingual, occlusal, and facial surfaces of the combined virtual arch model and intersects each guidance line in a generally perpendicular relationship such that each fitted arc passes over, without contacting, the virutal model and virtual anchors (or analogs).

An exterior surface of the virtual removable section may be formed by fitting a surface to the set of fitted arcs. In some embodiments, the exterior surface is an open-ended shell that completely covers the occlusal, lingual, and facial sides of the virtual combined model that includes the model and anchors (and/or analogs). Optionally, a surface smoothing operation is subsequently executed on the exterior surface. Then the remainder of a virtual shell is derived using the exterior surface. A solid shell may be formed by defining a composite surface that includes the exterior surface and a planar surface that extends across the cavity formed by the exterior surface. When virtually aligned with the virtual combined model, the virtual tray body surrounds both the teeth and analogs. The combined model (including anchors and/or analogs) may then be virtually subtracted from the virtual transfer tray body to produce a virtual removable section precursor. Virtual removable section precursor includes a body, which will typically have a shell-like configuration and further includes one or more receptacles formed by the negative virtual imprints of the anchors and/or analogs. The virtual precursor, which is preferably present in the form of a computer processable three-dimensional data file may be transmitted to an additive manufacturing machine which manufactures the physical removable section based on the virtual precursor.

In some or all embodiments, finite element analysis (FEA) techniques may be used to analyze forces on a patient's teeth as well as the removable dental appliance during the determination of the dimensions and shapes of the removable dental appliance. For example, FEA may be used to analyze a solid model of the patient's teeth as the modeled teeth move from their initial positions to their final positions. In some or all embodiments, the treatment planning described herein may be embodied within a computer-readable storage medium, such as a computer-readable storage medium of clinician's computing device and or manufacturer's computer. The computer-readable storage medium stores computer-executable instructions that, when executed, configure a processor to perform the techniques described above. Use of FEA in appliance design is described, for example, in US Patent No. 6,739,870 (Lai, et al.).

A completed treatment plan for use in manufacturing the appliances of the present includes a plurality of successive arrangements between an initial arrangement and the desired final arrangement. The plurality of successive dental arrangements may be incorporated into a single appliance or apportioned between multiple appliances to be worn in series. Accordingly, a suitable treatment plan identifies a number of removable sections, anchors, and arch members in an acceptable series, as well as a target arrangement and a commencing arrangement for each appliance in the series. A plurality of planned, successive arrangements may be stored between the target and the commencing arrangements. As defined herein, the "target arrangement" may be a desired final dental arrangement or a planned successive dental arrangement the patient should reach after treatment with the appliance. In contrast, the "commencing arrangement" is the dental arrangement the appliance is configured to represent when the appliance is first placed in the patient's mouth. As such, it is closest in orientation to the initial or current arrangement of the patient's teeth, and in some embodiments represents the current arrangement

### Manufacturing and Compiling the Appliance

A coordinated adjustment appliance includes a set of anchors, one or more arch member segments, and a series of removable sections each corresponding to a successive or intermediate arrangement from the treatment plan. The anchors and arch member segments may be selected from pre-existing inventory or so called off-the-shelf appliances or manufactured separately. Each desired removable section 100 of a coordinated adjustment appliance may be manufactured using an automated manufacturing system based on a digital model of the removable section produced by a computer system. In different examples, removable section 100 may be formed using 3D printing or thermo-formed and trimmed, such as trimmed with 5-axis milling or laser cutting. With 3D printing, removable section 100 may be 3D printed directly by a 3D printing system, but in other examples, removable dental appliance 100 may be thermoformed over a mold of teeth formed using 3D printing. For example, a final dental arrangement can be determined using a computer algorithm or input from a treating professional in a treatment plan as described above, and one or more intermediate dental arrangements derived by sub-dividing the treatment into a series of discrete steps can be created. In one or more embodiments, one or more of the intermediate dental arrangements can include a reduced image as is described, e.g., in U.S. Patent Publication No. 2010/0260405 (Cinader, Jr.). Once each intermediate or final dental arrangement has been derived in such fashion, respective dental models and/or removable sections may be directly fabricated using rapid prototyping methods. Examples of rapid prototyping techniques include, but are not limited to, three-dimensional (3D) printing, selective area laser deposition or selective laser sintering (SLS), electrophoretic deposition, robocasting, fused deposition modeling (FDM), laminated object manufacturing (LOM), stereolithography (SLA) and photostereolithography. These and other methods of forming a positive dental model from scanned digital data are disclosed, e.g., in U.S. Patent No. 8,535,580 (Cinader, Jr.).

The anchors maybe made of any material that is suitable for use in the oral cavity and has sufficient strength to resist the stresses normally encountered during the course of orthodontic treatment. Suitable materials include, for example, metallic materials (such as stainless steel), ceramic materials (such as monocrystalline or polycrystalline alumina), and plastic materials (such as fiber-reinforced polycarbonate). In certain presently preferred circumstances, the anchors are is integrally made as a unitary component by a metal injection molding or additive manufacturing process. In one or more embodiments, the arch member segment can be formed by extrusion and then shaped using known techniques. In one or more embodiments, the arch member segment(s) can be formed by cutting, stamping, or etching a substrate. In one or more embodiments, a polymeric material can be thermoformed or cast to provide an arch member segment. In one or more embodiments, the arch member segment(s) can be formed using 3D printing techniques as described above.

Manufacturing may include post-processing to remove uncured resin and remove support structures, or to assemble various components, which may also be necessary and could also be performed in a clinical setting.

### Treatment Using a Coordinated Adjustment Appliance

Typically, the coordinated adjustment appliance is at least partially assembled *in situ,* that is not all components are coupled before seating the appliance on the patient's arch. In a typical first step, anchors are bonded one or more of the patient's posterior teeth. This may be accomplished by directly bonding the anchors to the teeth, or by use of transfer tray as exemplified in US Patent Nos. 7,556,496 (Cinader, Jr., et al.), 7,845,938 (Kim, et al.), and US Publication Nos. 2011/0091832 (Kim, et al) and No. 2015/0231687 (Blees, et al.). In presently preferred embodiments, the anchors are loaded in a tray and equipped with a compressible material on a bonding base as set forth in US 20090233252 (Cinader, Jr.).

In some embodiments (e.g., the fixed section depicted in FIG. 9), the arch member segments can be coupled to the anchor bodies before the anchors are bonded to the corresponding teeth. In other embodiments, the arch members segments are coupled to anchors after the anchors are properly seated on the teeth.

Next, a first removable section is installed on the arch and fitted over the anchor on the one or more dual treatment teeth. The first removable section is worn for prescribed period of time to define a first wear period. At the end of first wear period, the patient (or practitioner) removes the removable section from the mouth and replaces with a new removable section representing the next successive intermediate arrangement in the patient's treatment plan.

The treating practitioner may also choose an iterative approach to the fixed section of the appliance when the severity or complexity of the malocclusion is such that a single fixed section configuration is insufficient to reposition teeth from initial to final positions. A first fixed section can be configured to move teeth to an intermediate, non-final dental arrangement in cooperation with one or more removable sections. In these cases, treatment may be conducted in multiple stages where a series of two or more arch member segments are sequentially used with a single set of anchors to incrementally and progressively move teeth from an initial maloccluded dental arrangement to a final corrected dental arrangement.

In an exemplary embodiment of this treatment, a first arch member segment is connected to the anchors to re-position a patient's maloccluded teeth to an intermediate dental arrangement. The first arch member segment is then removed from the oral cavity. Next, a second arch member that has a configuration when relaxed that is different from the configuration of the first arch member when relaxed can be used in a similar fashion to re-position the patient's teeth from the intermediate dental arrangement to a final dental arrangement. If desired, the above process can be extended to two or more intermediate dental arrangements. In one or more embodiments, the first arch member and the second arch member can include the same configuration, but the second arch member can have material properties that are different from the first arch member. For example, one or more portions of the second arch member segment can include a stiffness that provides a corrective force or forces that are different from the corrective force or forces provided by the first arch member.

After wearing any number of removable sections and/or arch member segments, the patient may return to the practitioner who may evaluate the result of the first iteration of treatment. In the event that the first iteration of treatment has resulted in satisfactory final placement of the patient's teeth, the treatment may be ended. However, if the first iteration of treatment did not complete the desired movement of the patient's teeth, one or more additional iterations of treatment may be performed. To begin the next iteration of treatment, the practitioner may take another scan of the patient's teeth to facilitate the design of the ordered set of removable dental appliances. In some examples, evaluation of the result of the first iteration of treatment may include taking another scan of the patient's teeth, in which case beginning the next iteration of treatment may simply involve forwarding the digital model of the patients teeth to a manufacturing facility so that another removable section or series of removable sections may be manufactured for the patient based on the new positions of the patient's teeth. In yet other examples, the newly acquired scan may be used to create one or more iterations of removable sections in the practitioner's facility.

In one or more embodiments that utilize progressive treatment of a patient's teeth, second, third, or more intermediate scans of the teeth can be performed using any suitable technique or combination of techniques. The practitioner or manufacturer can then utilize these intermediate scans to provide one or more additional appliances that are adapted to provide one or more corrective forces to the teeth such that one or more teeth are repositioned to either a subsequent intermediate arrangement or a final target arrangement. Any suitable technique or combination of techniques can be utilized to provide these intermediate scans, models, and arch members, e.g., the techniques described in U.S. Patent Application Publication No. 2010/0260405 (Cinader, Jr.) and WO2016/109660.

Various techniques of this disclosure may be implemented in a wide variety of computer devices, such as servers (including the Cloud), laptop computers, desktop computers, notebook computers, tablet computers, hand-held computers, smart phones, and the like. Any components, modules or units have been described to emphasize functional aspects and does not necessarily require realization by different hardware units. The techniques described herein may also be implemented in hardware, software, firmware, or any combination thereof. Any features described as modules, units or components may be implemented together in an integrated logic device or separately as discrete but interoperable logic devices. In some cases, various features may be implemented as an integrated circuit device, such as an integrated circuit chip or chipset. Additionally, although a number of distinct modules have been described throughout this description, many of which perform unique functions, all the functions of all of the modules may be combined into a single module, or even split into further additional modules. The modules described herein are only exemplary and have been described as such for better ease of understanding.

If implemented in software, the techniques may be realized at least in part by a non-transitory computer-readable medium comprising instructions that, when executed in a processor, performs one or more of the methods described above. The computer-readable medium may comprise a tangible computer-readable storage medium and may form part of a computer program product, which may include packaging materials. The computer-readable storage medium may comprise random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The computer-readable storage medium may also comprise a non-volatile storage device, such as a hard-disk, magnetic tape, a compact disk (CD), digital versatile disk (DVD), Blu-ray disk, holographic data storage media, or other non-volatile storage device. The term "processor," as used herein may refer to any of the foregoing structure or any other structure suitable for implementation of the techniques described herein. In addition, in some aspects, the functionality described herein may be provided within dedicated software modules or hardware modules configured for performing the techniques of this disclosure. Even if implemented in software, the techniques may use hardware such as a processor to execute the software, and a memory to store the software. In any such cases, the computers described herein may define a specific machine that is capable of executing the specific functions described herein. Also, the techniques could be fully implemented in one or more circuits or logic elements, which could also be considered a processor.

The embodiments described above are illustrative of the present invention and other constructions are also possible. Accordingly, the present invention should not be deemed limited to the embodiments described in detail above and shown in the accompanying drawings, but instead only by a fair scope of the claims.

## Claims

1. An orthodontic appliance comprising:
a concave trough (102) having receptacles (108, 120) each corresponding to a number of a patient's teeth, the trough (102) having at least one receptacle (108, 120) configured to reposition one of the patient's teeth from a first position to a second position;
a first anchor (211) having a bonding base (230) and a body (220);
a second anchor (212) having a bonding base (230) and body (220); and
an arch member (250) releasably coupled to the first and second anchors (211, 212),
wherein the concave trough (102) includes a receptacle (120) having surfaces at least partially enveloping the anchor body (220) and arch member (250); and
wherein the enveloping receptacle (120) includes engagement regions (122) and relief regions (124,128);
said engagement regions (122) coupling the trough (102) to the anchor body (220), and wherein said relief regions (124, 128) have larger dimensions than the arch member (250) such that the receptacle (120) makes minimal or no direct contact with the arch member (250) during wear.

2. The orthodontic appliance of claim 1, wherein the arch member (250) is an archwire or a spring.

3. The orthodontic appliance of claim 1, wherein the arch member (250) includes a cross-sectional geometry that varies along a length of the arch member (250).

4. The orthodontic appliance of claim 1, wherein the concave trough (102) is removably coupled to the first anchor (211).

5. The orthodontic appliance of claim 1, wherein the concave trough (102) is not directly coupled to the second anchor (212).

6. The orthodontic appliance of claim 1, wherein, when the appliance is installed on the dental arch, both the first anchor (211) and the corresponding receptacle (108, 120) are in contact with a first tooth.

7. The orthodontic appliance of claim 6, wherein, when installed on the dental arch, the first anchor bonding base (230) is bonded to the first tooth.

8. The orthodontic appliance of any one of claims 6-7, wherein the first anchor (211) and the cavity (102) cooperate to reposition the first tooth from the first position to the second position.

9. The orthodontic appliance of claim 1, wherein the number of teeth are anterior teeth.

10. The orthodontic appliance of claim 1, wherein, when the appliance is installed on the dental arch, the second anchor (212) is bonded to a molar tooth.

11. The orthodontic appliance of claim 1, wherein the first and second anchors (211, 212) each includes a slot (330) extending across the body (220), and wherein each anchor (211, 212) includes a latch positioned to retain the arch member (250) in the corresponding slot (330).

12. The orthodontic appliance of claim 1, wherein the receptacle (120) enveloping the first anchor (211) engages at least the facial surfaces of the first anchor (211).

13. The orthodontic appliance of claim 1, and further comprising a third anchor (212) and a fourth anchor (214), wherein the third and fourth anchors (212, 214) are, when the appliance is installed on the dental arch, bonded to teeth in a different quadrant of the dental arch than the first and second anchors (211, 212).

14. The orthodontic appliance of claim 1, wherein the concave trough (102) covers the occlusal surfaces of the number of teeth when installed on the dental arch.

## Patentansprüche

1. Eine kieferorthopädische Vorrichtung, aufweisend:
eine konkave Mulde (102), die Aufnahmen (108, 120), die jeweils einer Anzahl von Zähnen eines Patienten entsprechen, aufweist, wobei die Mulde (102) mindestens eine Aufnahme (108, 120) aufweist, die dazu eingerichtet ist, einen der Zähne des Patienten von einer ersten Position in eine zweite Position neu zu positionieren;
einen ersten Anker (211), der eine Verbindungsbasis (230) und einen Körper (220) aufweist;
einen zweiten Anker (212), der eine Verbindungsbasis (230) und einen Körper (220) aufweist; und
ein Bogenelement (250), das lösbar mit dem ersten und zweiten Anker (211, 212) gekoppelt ist,
wobei die konkave Mulde (102) eine Aufnahme (120) aufweist, die Oberflächen, die den Ankerkörper (220) und das Bogenelement (250) mindestens teilweise umhüllen, aufweist; und
wobei die umhüllende Aufnahme (120) Eingriffsbereiche (122) und Aussparungsbereiche (124, 128) aufweist;
wobei die Eingriffsbereiche (122) die Mulde (102) mit dem Ankerkörper (220) koppeln, und wobei die Aussparungsbereiche (124, 128) größere Abmessungen als das Bogenelement (250) aufweisen, sodass die Aufnahme (120) während des Tragens minimalen oder keinen direkten Kontakt mit dem Bogenelement (250) herstellt.

2. Die kieferorthopädische Vorrichtung nach Anspruch 1, wobei das Bogenelement (250) ein Bogendraht oder eine Feder ist.

3. Die kieferorthopädische Vorrichtung nach Anspruch 1, wobei das Bogenelement (250) eine Querschnittsgeometrie aufweist, die entlang einer Länge des Bogenelements (250) variiert.

4. Die kieferorthopädische Vorrichtung nach Anspruch 1, wobei die konkave Mulde (102) mit dem ersten Anker (211) lösbar gekoppelt ist.

5. Die kieferorthopädische Vorrichtung nach Anspruch 1, wobei die konkave Mulde (102) nicht direkt mit dem zweiten Anker (212) gekoppelt ist.

6. Die kieferorthopädische Vorrichtung nach Anspruch 1, wobei, wenn die Vorrichtung auf dem Zahnbogen installiert ist, sowohl der erste Anker (211) als auch die entsprechende Aufnahme (108, 120) in Kontakt mit einem ersten Zahn sind.

7. Die kieferorthopädische Vorrichtung nach Anspruch 6, wobei, wenn sie auf dem Zahnbogen installiert ist, die erste Ankerbindungsbasis (230) mit dem ersten Zahn verbunden ist.

8. Die kieferorthopädische Vorrichtung nach einem der Ansprüche 6-7, wobei der erste Anker (211) und der Hohlraum (102) zusammenwirken, um den ersten Zahn von der ersten Position in die zweite Position neu zu positionieren.

9. Die kieferorthopädische Vorrichtung nach Anspruch 1, wobei die Anzahl von Zähnen Frontzähne sind.

10. Die kieferorthopädische Vorrichtung nach Anspruch 1, wobei, wenn die Vorrichtung auf dem Zahnbogen installiert ist, der zweite Anker (212) mit einem Backenzahn verbunden ist.

11. Die kieferorthopädische Vorrichtung nach Anspruch 1, wobei der erste und der zweite Anker (211, 212) jeweils eine Aussparung (330) aufweisen, die sich über den Körper (220) erstreckt, und wobei jeder Anker (211, 212) einen Riegel aufweist, der positioniert ist, um das Bogenelement (250) in der entsprechenden Aussparung (330) zu sichern.

12. Die kieferorthopädische Vorrichtung nach Anspruch 1, wobei die Aufnahme (120), die den ersten Anker (211) umhüllt, mindestens mit den fazialen Oberflächen des ersten Ankers (211) in Eingriffsverbindung gelangt.

13. Die kieferorthopädische Vorrichtung nach Anspruch 1, und ferner aufweisend einen dritten Anker (212) und einen vierten Anker (214), wobei der dritte und vierte Anker (212, 214), wenn die Vorrichtung auf dem Zahnbogen installiert ist, mit Zähnen in einem anderen Quadranten des Zahnbogens als der erste und zweite Anker (211, 212) verbunden sind.

14. Die kieferorthopädische Vorrichtung nach Anspruch 1, wobei die konkave Mulde (102) die okklusalen Oberflächen der Anzahl von Zähnen bedeckt, wenn sie auf dem Zahnbogen installiert ist.

## Revendications

1. Appareil orthodontique comprenant :
une rigole concave (102) ayant des réceptacles (108, 120) correspondant chacun à un nombre de dents d'un patient, la rigole (102) ayant au moins un réceptacle (108, 120) configuré pour repositionner une des dents du patient d'une première position à une deuxième position ;
un premier ancrage (211) ayant une base de liaison (230) et un corps (220) ;
un deuxième ancrage (212) ayant une base de liaison (230) et un corps (220) ; et
un élément d'arc (250) couplé de manière libérable aux premier et deuxième ancrages (211, 212),
dans lequel la rigole concave (102) inclut un réceptacle (120) ayant des surfaces enveloppant au moins partiellement le corps d'ancrage (220) et l'élément d'arc (250) ; et
dans lequel le réceptacle enveloppant (120) inclut des régions de mise en prise (122) et des régions de relief (124, 128) ;
lesdites régions de mise en prise (122) couplant la rigole (102) au corps d'ancrage (220), et dans lequel lesdites régions de relief (124, 128) ont des dimensions plus grandes que l'élément d'arc (250) de telle sorte que le réceptacle (120) fait un contact direct minimal ou nul avec l'élément d'arc (250) pendant le port.

2. Appareil orthodontique selon la revendication 1, dans lequel l'élément d'arc (250) est un arc dentaire ou un ressort.

3. Appareil orthodontique selon la revendication 1, dans lequel l'élément d'arc (250) inclut une géométrie en coupe qui varie le long d'une longueur de l'élément d'arc (250).

4. Appareil orthodontique selon la revendication 1, dans lequel la rigole concave (102) est couplée de manière amovible au premier ancrage (211).

5. Appareil orthodontique selon la revendication 1, dans lequel la rigole concave (102) n'est pas directement couplée au deuxième ancrage (212).

6. Appareil orthodontique selon la revendication 1, dans lequel, lorsque l'appareil est installé sur l'arc dentaire, tant le premier ancrage (211) que le réceptacle correspondant (108, 120) sont en contact avec une première dent.

7. Appareil orthodontique selon la revendication 6, dans lequel, lorsqu'elle est installée sur l'arc dentaire, la base de liaison de premier ancrage (230) est liée à la première dent.

8. Appareil orthodontique selon l'une quelconque des revendications 6 à 7, dans lequel le premier ancrage (211) et la cavité (102) coopèrent pour repositionner la première dent de la première position à la deuxième position.

9. Appareil orthodontique selon la revendication 1, dans lequel le nombre de dents sont des dents antérieures.

10. Appareil orthodontique selon la revendication 1, dans lequel, lorsque l'appareil est installé sur l'arc dentaire, le deuxième ancrage (212) est lié à une molaire.

11. Appareil orthodontique selon la revendication 1, dans lequel les premier et deuxième ancrages (211, 212) incluent chacun une fente (330) s'étendant à travers le corps (220), et dans lequel chaque ancrage (211, 212) inclut un verrouillage positionné pour retenir l'élément d'arc (250) dans la fente correspondante (330).

12. Appareil orthodontique selon la revendication 1, dans lequel le réceptacle (120) enveloppant le premier ancrage (211) vient en prise avec au moins les surfaces faciales du premier ancrage (211).

13. Appareil orthodontique selon la revendication 1, et comprenant en outre un troisième ancrage (212) et un quatrième ancrage (214), dans lequel les troisième et quatrième ancrages (212, 214) sont, lorsque l'appareil est installé sur l'arc dentaire, liés à des dents dans un quadrant différent de l'arc dentaire par rapport aux premier et deuxième ancrages (211, 212).

14. Appareil orthodontique selon la revendication 1, dans lequel la rigole concave (102) couvre les surfaces occlusives du nombre de dents lorsqu'elle est installée sur l'arc dentaire.
